# EUROPEAN PATENT APPLICATION

(11) **EP 4 559 989 A1**
(43) Date of publication of application: **28.05.2025**
(21) Application number: 23834626.6
(22) Date of filing: 20.06.2023
(51) Int. Cl.: C09J 7/10, C09J 153/00

(54) **OPTICALLY CLEAR PRESSURE SENSITIVE ADHESIVE (OCA) AND PREPARATION METHOD THEREFOR**

(30) Priority: 06.07.2022 CN 202210797594
(71) Applicant: Zhejiang University, Hangzhou, Zhejiang 310058 (CN)
(72) Inventor: ZHANG, Ao, Hangzhou, Zhejiang 310058 (CN); LUO, Yingwu, Hangzhou, Zhejiang 310058 (CN)
(74) Representative: Canzler & Bergmeier Patentanwälte Partnerschaft mbB
(86) International application number: PCT/CN2023/101188
(87) International publication number: WO 2024/007852

(57) **Abstract**

Disclosed in the present invention are an optically clear pressure sensitive adhesive (OCA) and a preparation method therefor. The optical pressure-sensitive adhesive is composed of one or more block copolymers. In the method, reversible addition fragmentation chain transfer emulsion polymerization is used; by controlling monomer types and the feeding sequence, the block copolymers are designed and prepared in a controllable manner; and one or more prepared block copolymers are mixed, and by means of solution film forming, an optically clear pressure sensitive adhesive (OCA) is prepared. The optically clear pressure sensitive adhesive (OCA) prepared in the present invention has the advantages of high stretchability, high transparency and a low haze, can effectively reduce the modulus and improve the peel strength on the basis that the rebound resilience is not influenced, and has large application prospects in the fields of electronic display apparatuses, wearable electronic apparatuses, resistive touch screens, intelligent optical devices, etc.

## Description

### FIELD OF DISCLOSURE

The present disclosure relates to the field of adhesives, and in particular, to an OCA optically clear pressure sensitive adhesive and a preparation method thereof.

### DESCRIPTION OF RELATED ARTS

In the modern information electronics industry, displays serve as an interface through which users interact with machine, enabling both operation and responsive feedback. As an important component of a human-machine interaction interface in contemporary electronic devices, the development of display technology and related materials is a critical factor for advancement of cutting-edge electronic device. Optically clear pressure sensitive adhesive (OCA) is an essential functional material widely used in display devices for bonding transparent optical elements. It is characterized by being colorless and transparent, with a light transmittance more than 90%, good adhesion strength, the ability to cure at room temperature, minimal curing shrinkage, etc. OCA has high flexibility and viscoelasticity, and the ability to reduce refractive index differences by eliminating air gaps, thereby enhancing image clarity. In order to make the electronic display screens with less rigid appearance and foster more natural interaction between users and devices, displays have evolved from traditional flat screens to flexible arc-shaped screens, curved screens, foldable screens, and even rollable screens. Additionally, the increasing demand for wearable and flexible electronic devices has led to a growing interest in flexible displays. The emergence of these new display forms poses new challenges for the performance of the OCA optically clear pressure sensitive adhesive. The traditional OCA has the characteristics of high modulus and strong adhesion.

However, the tensile stress exerted on the screen is increased during the folding process, resulting in severe material fatigue. This causes adhesive failure in practical use, thereby resulting in visual discomfort, negatively affecting the use experience, and significantly reducing the service life of the mobile phone with the foldable screen. At present, the OCA optically clear pressure sensitive adhesive used in the mobile phone with the foldable screen needs to possess three key properties: (1) high flexibility, allowing the OCA to generate significant shear strain and low stress under high deformation; (2) high elasticity, enabling for rapid recovery even after prolonged static folding; (3) strong interface adhesion, preventing delamination and adhesive failure under compression.

Currently, most OCA optically clear pressure sensitive adhesive is prepared by photoinitiated polymerization, in which increasing the concentration of the initiator can enhance the crosslinking density, thus improving the elasticity of OCA optically clear pressure sensitive adhesive; and incorporating functional monomers (e.g., acrylic acid) can enhance the cohesion of the material, thus also improving the elasticity of the OCA optically clear pressure sensitive adhesive. However, the key challenge lies in balancing flowability and elasticity. Although the modulus of OCA optically clear pressure sensitive adhesive can be consequently improved, the poor tensile properties makes the OCA difficult to be applied to a mobile phone with a foldable screen.

Additionally, the OCA optically clear pressure sensitive adhesive with alternating regions of high and low crosslinking density have also been developed using UV mold techniques. While this method can reduce the modulus and improve peel strength of the OCA optically clear pressure sensitive adhesive to some extent, it also leads to a decrease in the material's resilience.

The method to balance elasticity and flexibility involves introducing 10 mol% acrylic acid into the pressure sensitive adhesive prepolymer. This results in the peel strength of the OCA optically clear pressure sensitive adhesive with a film thickness of 100 µm being increased to approximately 14 N/25 mm. The resulting material exhibits a glass transition temperature of -54.3°C and a modulus of 27 kPa. However, when the strain exceeds 300%, the material fractures, making it unsuitable for long-term OCA applications.

Therefore, a critical technical challenge is developing an OCA optically clear pressure sensitive adhesive with improved tensile properties, enhanced peel strength without influencing resilience, and reduced modulus, which achieves a balance among flexibility, modulus, and interface adhesion.

### SUMMARY OF THE PRESENT INVENTION

The present disclosure provides a preparation method for an OCA optically clear pressure sensitive adhesive. The block copolymers are designed and prepared in a controllable manner by using reversible addition fragmentation chain transfer emulsion polymerization, and the OCA optically clear pressure sensitive adhesive with high stretchability, high transparency, and low haze is prepared by means of solution film forming of one or more block copolymers. This method can effectively reduce the modulus and improve the peel strength on the basis that the resilience is not influenced.

The present disclosure comprises the following technical solution:

The OCA optically clear pressure sensitive adhesive comprising: a main matrix with a mass content of 20-100% and an enhanced matrix with a mass content of 0-80%.

The structural formula of the main matrix is M₁-b-M₂-b-M₃••••••-b-Mⱼ, wherein j ranges from 3 to 11; M₁, M₂, M₃••••••Mⱼ are comonomers in a first block copolymer formed by the main matrix, and a number average molecular weight of the first block copolymer formed by the main matrix is in a range of 80,000-800,000 g/mol; each of M₁, M₂, M₃••••••Mⱼ is independently selected from a soft monomer, a hard monomer, and a functional monomer; a mass content of the soft monomer, the hard monomer, and the functional monomer in the first block copolymer is 70-98%, 2-30%, and 0-5%, respectively.

The structural formula of the enhanced matrix is N₁ or N₁-B-N₂, and the number average molecular weight of a second block copolymer formed by the enhanced matrix is in a range of 100,000-400,000 g/mol; N₁ is selected from the soft monomer, N₂ is selected from the hard monomer and the functional monomer, and a mass content of the soft monomer, the hard monomer, and the functional monomer in the second block copolymer is 75-100%, 0-25%, and 0-5%, respectively.

Specifically, the hard monomer comprises styrene, methyl acrylate, methyl methacrylate, acrylamide, acrylonitrile and vinyl acetate, each having a glass transition temperature in a range of 60-150°C; the soft monomer comprises ethyl acrylate, n-butyl acrylate, isobutyl acrylate, tert-butyl acrylate, isooctyl acrylate, n-butyl methacrylate, isobutyl methacrylate, tert-butyl methacrylate, isooctyl methacrylate, butadiene, isoprene, ethylene-butylene, and methacrylic acid, each having a glass transition temperature in a range of -90 to -30°C; the functional monomer comprises methacrylic acid, acrylic acid, itaconic acid, hydroxyethyl acrylate, hydroxypropyl acrylate, hydroxyethyl methacrylate, hydroxypropyl methacrylate, dimethylaminoethyl methacrylate, methacrylamide, N-hydroxymethyl acrylamide, glycidyl methacrylate, and maleic anhydride.

The specific steps of the method for preparing the OCA optically clear pressure sensitive adhesive are as follows:
(1) dissolving a first amphiphilic macromolecule reversible addition fragmentation chain transfer reagent in water, then adding styrene or a mixture of styrene and methacrylic acid and performing stirring until uniform, adding a first initiator at 70-90°C and performing a reaction for 1-3 h to obtain a first homopolymer, wherein the first homopolymer is stably dispersed in water in a particle form to form a first latex;
(2) adding a 10 wt% sodium hydroxide aqueous solution, then adding isooctyl acrylate or a mixture of isooctyl acrylate and methacrylic acid, then adding water, then adding a second initiator at 40-60°C and performing a reaction for 4-10 h under an oxygen-free environment, and then adding a hard monomer and performing a reaction for 5-10 h under an oxygen-free environment to obtain a main matrix polymer latex;
(3) after the reaction, introducing the main matrix polymer latex, 30 wt% hydrogen peroxide, and 7.5 wt% hydrochloric acid in a beaker at a volume ratio of 2:1:2, performing stirring for 15 min until uniform, then performing heating to 50°C and a reaction for 1.5-3 h to obtain a first precipitated product; washing the first precipitated product with distilled water until neutral, and performing air drying and then vacuum drying in a vacuum oven at 120°C for 5-20 h to obtain a main matrix;
(4) dissolving a second amphiphilic macromolecule reversible addition fragmentation chain transfer reagent in water, then adding styrene or a mixture of styrene and methacrylic acid and performing stirring until completely dissolved, adding the first initiator in a water bath at 70-90°C and performing a reaction for 1-3 h to obtain a second homopolymer, wherein the second homopolymer is stably dispersed in water in a particle form to form a second latex;
(5) adding a 10 wt% sodium hydroxide aqueous solution, adding isooctyl acrylate and water, then adding the second initiator in a water bath at 40-60°C and performing a reaction for 4-10 h under an oxygen-free environment to obtain an enhanced matrix polymer latex;
(6) after the reaction, introducing the enhanced matrix polymer latex, 30 wt% hydrogen peroxide, and 7.5 wt% hydrochloric acid in a beaker at a volume ratio of 2:1:2, performing stirring for 15 min until uniform, then performing heating to 40-60°C and a rection for 1.5-3 h to obtain a second precipitated product; washing the second precipitated product with distilled water several times until neutral, and performing air drying and then vacuum drying in a vacuum oven at 120°C for 5-20 h to obtain an enhanced matrix;
(7) dissolving the main matrix and the enhanced matrix in a dispersion medium, and performing coating to obtain a film under an argon environment, and drying to obtain the OCA optically clear pressure sensitive adhesive.

Specifically, the first chemical structural formula of the amphiphilic macromolecule reversible addition fragmentation chain transfer reagent and the second chemical structural formula of the amphiphilic macromolecule reversible addition fragmentation chain transfer reagent have a structure of R-(Mₙ₁-b-Nₙ₂)-X;
wherein R is an isopropanoic acid group, acetic acid group, 2-cyanoacetic acid group, or 2-aminoacetic acid group; in Mₙ₁, M is a methacrylic acid monomer or an acrylic acid monomer unit, n1 is an average degree of polymerization of M, and n1 ranges from 10 to 30; in Nₙ₂, N is a styrene monomer, an n-butyl acrylate monomer, a methyl acrylate, an isooctyl acrylate or a methyl methacrylate monomer unit, n2 is an average degree of polymerization of n, n2 ranges from 1 to 8; X is an alkyl dithioester group or an alkyl trithioester group.

Furthermore, the dispersion medium is any one of diethyl ether, methyl tert-butyl ether, tetrahydrofuran, methyl ethyl ketone, ethyl acetate, and methyl propionate.

Specifically, the first initiator in steps (1) and (4) is any one of ammonium persulfate, potassium persulfate, hydrogen peroxide and hydrogen peroxide derivatives; and the second initiator in steps (2) and (5) is any one of 2,2'-azobis[2-(2-imidazolin-2-yl)propane] dihydrochloride, 2,2'-azobis[2-methylpropionamidine] dihydrochloride, 2-hydroxy-4'-(2-hydroxyethoxy)-2-methyl-propiophe, sodium hydrogen persulfate/potassium persulfate redox initiator, and sodium persulfate/ammonium persulfate redox initiator. Furthermore, the acrylic acid in steps (1) or (2) is replaced with another functional monomers.

The beneficial effects of the present disclosure includes:
(1) The block copolymers which serve as OCA optically clear pressure sensitive adhesives can be prepared in a controllable manner by using reversible addition fragmentation chain transfer emulsion polymerization. The soft segment in the block copolymers is formed by polymerizing soft monomers or combinations of a soft monomer and a functional monomer, and the hard segment in the block copolymers is formed by polymerizing hard monomers or combinations of a hard monomer and a functional monomer. Compared to the homopolymer, block copolymers exhibit minimal changes in the glass transition temperature.
(2) The addition of the diblock copolymer or homopolymer can significantly reduce the modulus of the OCA optically clear pressure sensitive adhesive. The introduction of the functional monomer allows for the adjustment of the glass transition temperature, cohesion, and peel strength of the OCA optically clear pressure sensitive adhesive.
(3) By using a low-cost, industrializable, and controllable living radical polymerization method, the synthesized block copolymers can be continuously and large-scale manufactured. The method simplifies process and is beneficial for the customized production of the OCA optically clear pressure sensitive adhesive.
(4) The OCA optically clear pressure sensitive adhesive prepared by the method in the present disclosure possesses the characteristics of full flexibility, high transparency, excellent tensile properties, and high peel strength. It also exhibits outstanding resilience, with a recovery rate exceeding 95%.

### BRIEF DESCRIPTION OF THE DRAWINGS

FIG. 1 is a GPC curve of the block copolymer according to an embodiment of the present disclosure;
FIG. 2 is a tensile stress-strain curve of the block copolymer according to an embodiment of the present disclosure;
FIG. 3 is a stress relaxation and recovery curve of the block copolymer according to an embodiment of the present disclosure;
FIG. 4 shows the shear dynamic mechanical property in the present disclosure;
FIG. 5 shows the shear dynamic mechanical property in the present disclosure;
FIG. 6 shows the peel strength in the present disclosure;
FIG. 7 is a stress relaxation and recovery curve of the block copolymer according to an embodiment of the present disclosure.

### DETAILED DESCRIPTION OF THE PREFERRED EMBODIMENTS

The following are specific embodiments of the present disclosure, providing a further description of the technical solution of the present disclosure, but the present disclosure is not limited to these embodiments.

### Embodiment 1: Preparation and Properties of styrene-b-isooctyl acrylate-b-styrene Triblock Copolymer

In this embodiment, the material was prepared by using an RAFT reversible addition fragmentation chain transfer emulsion polymerization method, and the specific steps were as follows:
Step 1: 1 part by weight of the amphiphilic macromolecule RAFT reagent (amphiphilic macromolecule reversible addition fragmentation chain transfer reagent) was added and completely dissolved in 13 parts by weight of water by performing stirring. Then, 6 parts by weight of styrene or 6 parts by weight of styrene and 1 part by weight of methacrylic acid were added, wherein the methacrylic acid was introduced to improve the adhesion between the monomers. Stirring was then carried out. The chemical structure of the amphiphilic macromolecule RAFT reagent was as follows: 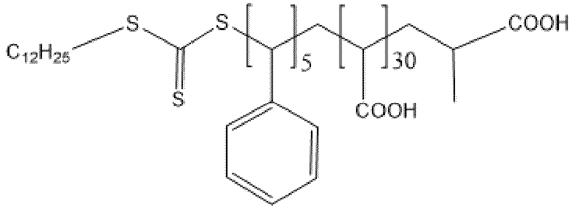
Step 2: The above materials were added to a four-necked flask, and nitrogen was purged at room temperature for 0.5 h to remove oxygen. The mixture was then heated in a water bath to 70°C, and an initiator, potassium persulfate aqueous solution (0.02 parts by weight of potassium persulfate dissolved in 12 parts by weight of water), was added to initiate the reaction, and the reaction was then carried out for 1 h. Subsequently, sodium hydroxide aqueous solution (1 part by weight of sodium hydroxide dissolved in 10 parts by weight of water) was slowly added, followed by introducing 90 parts by weight of isooctyl acrylate and 50 parts by weight of water. Afterward, 0.02 parts by weight of 2,2'-azobis[2-(2-imidazolin-2-yl)propane] dihydrochloride was added, and the reaction was allowed to proceed for 2 h. Finally, 7 parts by weight of styrene were added, and the reaction continued for 1.5 h to obtain a polymer latex.
Step 3: The polymer latex, 30 wt% hydrogen peroxide, and 7.5 wt% hydrochloric acid were mixed in a beaker at a volume ratio of 2:1:2, stirred for 15 min until uniform, then heated to 50°C and reacted in air for 1.5 h.
Step 4: After the reaction, the precipitated product was washed several times with distilled water until neutral, then air-dried and placed in a vacuum oven at 120°C for 12 h, obtaining white polymer particles.
Step 5: The white polymer particles were dissolved in butanone, poured into a polytetrafluoroethylene (PTFE) dish with a diameter of 12 cm to form a film, during which most of the solvent was evaporated at room temperature, and then placed in a vacuum oven at 130°C for further drying and annealing, obtaining a polymer film with a thickness of approximately 0.8 to 1 mm.
Step 6: The polymer film was dissolved in butanone, and an OCA optically clear pressure sensitive adhesive film with a thickness of approximately 25 µm was prepared by a wire rod coater for peel strength testing.

The molecular weight characterization of the polymer was carried out using a gel permeation chromatography (GPC) instrument (Waters 1525-2414-717), with tetrahydrofuran (THF) as the eluent. Calibration was performed using a narrow molecular weight distribution polystyrene standard.

The mechanical properties of the polymer were tested using a universal testing machine (Zwick/Roll Z020). The polymer film from Step 6 was cut into dumbbell-shaped strips using a standard sample cutter for testing. The test method followed GB 16421-1996, with a tensile rate of 30 mm/min. Each sample was tested at least three times to ensure accuracy.

The stress relaxation and recovery performance of the polymer was tested using a Dynamic Mechanical Analyzer (DMA, TAQ800). The OCA optically clear pressure sensitive adhesive film from Step 6 was cut into strips with a width of 5 mm and a length of 25 mm. The samples were stretched for 1 h at strain levels of 100%, 200%, 300%, 400%, and 500%, respectively. Afterward, the stress was reduced to 0 MPa and maintained for 1 h. The recovery curves were recorded.

The dynamic mechanical properties of the polymer were characterized by using a rotational rheometer (HAAKE MARS 60). The polymer film was cut into circles with a diameter of 2 cm. The test was conducted at a frequency ranging from 0.01 Hz to 1 Hz and a temperature of 25°C. The loss factor tanδ of the material was recorded.

The peel strength of the polymer was tested by using an adhesive shear strength testing machine (KJ-1066A). The OCA optically clear pressure sensitive adhesive film from Step 6 was cut into strips with a width of 25 mm and a length of approximately 300 mm. The test method followed GB/T 2792-2014, with each sample being tested at least three times to ensure accuracy.

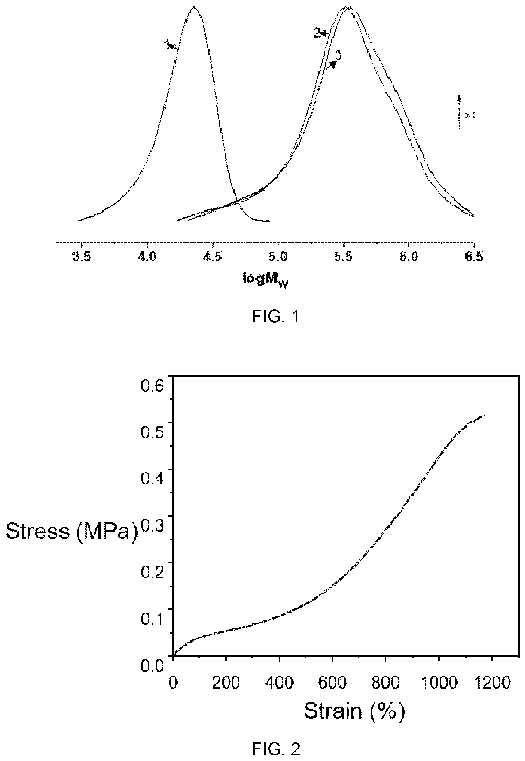

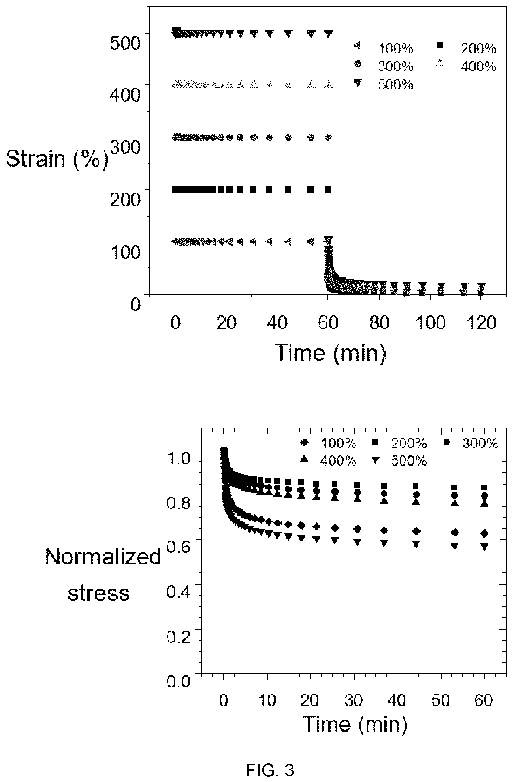

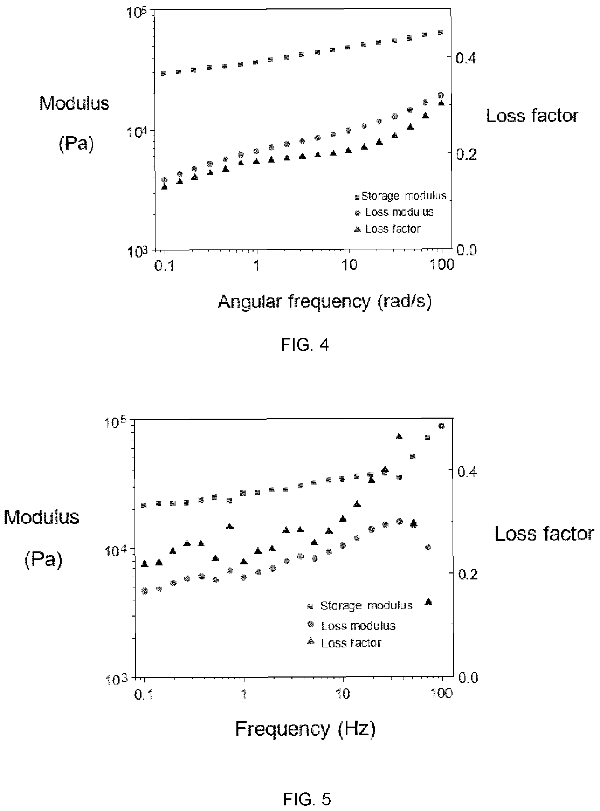

FIG. 1 shows GPC curves of the block copolymer obtained after each reaction, wherein Curve 1 represents polystyrene (Pst); Curve 2 represents poly(styrene-b-isooctyl acrylate) (PSt-EHA); Curve 3 represents poly(styrene-b-isooctyl acrylate-b-styrene) (PSt-EHA-Pst). It can be seen that as the number of blocks increased, the molecular weight of the polymer shifted toward higher molecular weight regions, indicating that styrene-b-isooctyl acrylate-b-styrene triblock copolymer was prepared. The styrene-b-isooctyl acrylate-b-styrene triblock copolymer comprises polystyrene end blocks (with a molecular weight of 15 kDa each) and a central block of poly(acrylate) with a molecular weight of 225 kDa.. FIG. 2 shows the tensile stress-strain curves of the styrene-b-isooctyl acrylate-b-styrene triblock copolymer. It can be seen that the polymer had a low modulus of 162.7 kPa, a low stress of 0.515 MPa, and a high elongation at break of nearly 1200%. FIG. 3 shows stress relaxation and recovery curves of the OCA optically clear pressure sensitive adhesive, and it can be seen that at 100% tensile strain, the final deformation rate was only 4.55%; at 200% tensile strain, the final deformation rate was 5.07%; at 300% tensile strain, the final deformation rate was 8.93%; at 400% tensile strain, the final deformation rate was only 11.58%; and at 500% tensile strain, the final deformation rate was 17.05%. FIG. 4 shows the shear dynamic mechanical property of the OCA optically clear pressure sensitive adhesive, the shear modulus was only 26 KPa, and tanδ was only 0.2021.

When the thickness of the adhesive film was 25 µm, the peel strength was 6.40 N/25 mm.

### Embodiment 2: Preparation and Properties of styrene-b-isooctyl acrylate-b-styrene Triblock Copolymer

The steps in this embodiment were basically the same as the steps in Embodiment 1, except that the added styrene was 1 part by weight, and the added isooctyl acrylate was 18 parts by weight.

The molecular weight characterization and mechanical properties testing of the polymer in this embodiment were similar to those in Embodiment 1.

FIG. 5 shows the shear dynamic mechanical property of the polymer prepared in this embodiment, wherein the storage modulus was 45 KPa. At 300% tensile strain, the sample fractured after maintaining for 47 min. When the thickness of the film was 25 µm, the peel strength of the OCA optically clear pressure sensitive adhesive film was 10.01N/25 mm.

### Embodiment 3: Blend of the styrene-b-isooctyl acrylate-b-styrene Triblock Copolymer and styrene-b-isooctyl acrylate diblock Copolymer

In this embodiment, the preparation method of the triblock copolymer was the same as that in Embodiment 1. The styrene-b-isooctyl acrylate deblock copolymer was prepared by using an RAFT reversible addition fragmentation chain transfer emulsion polymerization method, and the specific steps were as follows:
Step 1: 1 part by weight of the amphiphilic macromolecule RAFT reagent was added and dissolved in 13 parts by weight of water by performing stirring. Then, 6 parts by weight of styrene were added. Stirring was then carried out. The chemical structure of the amphiphilic macromolecule RAFT reagent was as follows: 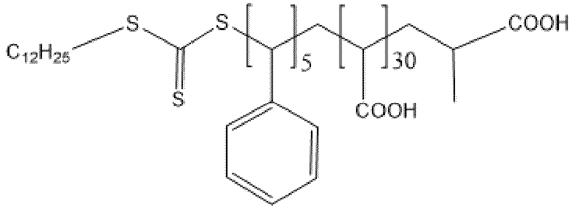
Step 2: The above materials were added to a four-necked flask, and nitrogen was purged at room temperature for 0.5 h to remove oxygen. The mixture was then heated in a water bath to 70°C, and an initiator, potassium persulfate aqueous solution (0.02 parts by weight of potassium persulfate dissolved in 12 parts by weight of water), was added to initiate the reaction, and the reaction was carried out for 1 h. Subsequently, sodium hydroxide aqueous solution (1 part by weight of sodium hydroxide dissolved in 10 parts by weight of water) was slowly added, followed by introducing 24 parts by weight of isooctyl acrylate and 50 parts by weight of water. Afterward, 0.02 parts by weight of 2,2'-azobis[2-(2-imidazolin-2-yl)propane] dihydrochloride was added, and the reaction was allowed to proceed for 2 h to obtain a polymer latex.
Step 3: The polymer latex, 30 wt% hydrogen peroxide, and 7.5 wt% hydrochloric acid were mixed in a beaker at a volume ratio of 2:1:2, stirred for 15 min until uniform, then heated to 50°C and reacted in air for 1.5 h.
Step 4: After the reaction, the precipitated product was washed several times with distilled water until neutral, then air-dried and placed in a vacuum oven at 120°C for 12 h, obtaining white polymer particles.
Step 5: The triblock copolymer in Embodiment 1 and the diblock copolymer particles in this embodiment were dissolved in butanone according to a ratio of 75/25, 50/50, 25/75, respectively, poured into a polytetrafluoroethylene (PTFE) dish with a diameter of 12 cm to form a film, during which most of the solvent was evaporated at room temperature, and then placed in a vacuum oven at 130°C for further drying and annealing, obtaining a polymer film with a thickness of approximately 0.8 to 1 mm.
Step 6: The polymer film was dissolved in butanone, and an OCA optically clear pressure sensitive adhesive film with a thickness of approximately 25 µm was prepared by a wire rod coater for peel strength testing.

The molecular weight characterization and properties testing of the polymer in this embodiment were similar to those in Embodiment 1. The styrene-b-isooctyl acrylate diblock copolymer comprises a polystyrene block with a molecular weight of 10 kDa and a of poly(acrylate) block with a molecular weight of 40 kDa.

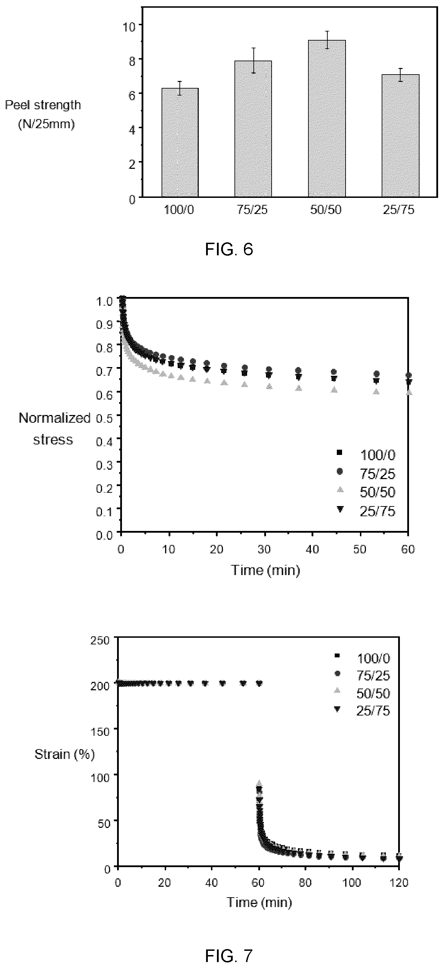

FIG. 6 shows the peel strength performance with different addition proportions of the diblock copolymer. Compared to the pure triblock copolymer, the peel strength increased from 6.40 N/25 mm to 9.40 N/25 mm when the addition proportion of the diblock copolymer was 50%; FIG. 7 shows the stress relaxation and recovery performance, and it can be seen that as the addition proportion of the diblock copolymers increased, the resilience remained unchanged, with the final deformation rate being around 11%.

### Embodiment 4: Blend of a styrene-b-isooctyl acrylate-b-styrene Triblock Copolymer and styrene-b-(isooctyl acrylate-r-acrylic acid) diblock Copolymer

In this embodiment, the preparation method of the triblock copolymer was the same as that in Embodiment 1. The styrene-b-(isooctyl acrylate-r-acrylic acid) diblock copolymer was prepared by using an RAFT reversible addition fragmentation chain transfer emulsion polymerization method, and the specific steps were as follows:
Step 1: 1 part by weight of the amphiphilic macromolecule RAFT reagent was added and dissolved in 13 parts by weight of water by performing stirring. Then, 6 parts by weight of styrene were added. Stirring was carried out. The chemical structure of the amphiphilic macromolecule RAFT reagent was as follows: 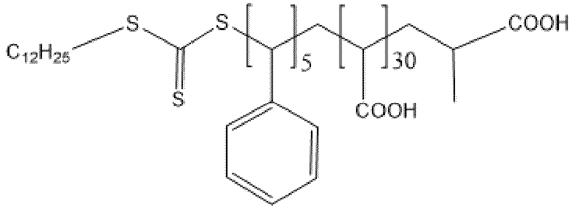
Step 2: The above materials were added to a four-necked flask, and nitrogen was purged at room temperature for 0.5 h to remove oxygen. The mixture was then heated in a water bath to 70°C, and an initiator, potassium persulfate aqueous solution (0.02 parts by weight of potassium persulfate dissolved in 12 parts by weight of water), was added to initiate the reaction, and. the reaction was carried out for 1 h. Subsequently, sodium hydroxide aqueous solution (1 part by weight of sodium hydroxide dissolved in 10 parts by weight of water) was slowly added, followed by introducing 48 parts by weight of isooctyl acrylate, 1 part by weight of acrylic acid and 50 parts by weight of water. Afterward, 0.02 parts by weight of 2,2'-azobis[2-(2-imidazolin-2-yl)propane] dihydrochloride was added, and the reaction was allowed to proceed for 2 h to obtain a polymer latex.
Step 3: The polymer latex, 30 wt% hydrogen peroxide, and 7.5 wt% hydrochloric acid were mixed in a beaker at a volume ratio of 2:1:2, stirred for 15 min until uniform, then heated to 50°C and reacted in air for 1.5 h.
Step 4: After the reaction, the precipitated product was washed several times with distilled water until neutral, then air-dried and placed in a vacuum oven at 120°C for 12 h, obtaining white polymer particles.
Step 5: The triblock copolymer of Embodiment 1 and the diblock copolymer particles in this embodiment were dissolved in butanone according to a ratio of 50/50, and an OCA optically clear pressure sensitive adhesive film with a thickness of approximately 25 µm was prepared by a wire rod coater for peel strength testing.

The molecular weight characterization and mechanical properties testing of the polymer in this embodiment were similar to those in Embodiment 1.

Compared to the triblock copolymer in Embodiment 1, the peel strength of the block copolymer in this embodiment increased to 12.21 N/25 mm, and the introduction of the functional monomer can further improve the performance of the OCA optically clear pressure sensitive adhesive.

The above embodiments are used to explain the present disclosure rather than limiting the present disclosure, and any modifications and changes made to the present disclosure within the spirit of the present disclosure and the protection scope of the claims all fall within the protection scope of the present disclosure.

## Claims

1. An OCA optically clear pressure sensitive adhesive, comprising:
a main matrix with a mass content of 20-100%, and
an enhanced matrix with a mass content of 0-80%;
wherein the structural formula of the main matrix is M₁-b-M₂-b-M₃......-b-Mⱼ, wherein j ranges from 3 to 11; M₁, M₂, M₃......Mⱼ are comonomers in a first block copolymer formed by the main matrix, and a number average molecular weight of the first block copolymer formed by the main matrix is in a range of 80,000-800,000 g/mol; each of M₁, M₂, M₃......Mⱼ is independently selected from a soft monomer, a hard monomer, and a functional monomer; a mass content of the soft monomer, the hard monomer, and the functional monomer in the first block copolymer is 70-98%, 2-30%, and 0-5%, respectively;
the structural formula of the enhanced matrix is N₁ or N₁-B-N₂, wherein the number average molecular weight of a second block copolymer formed by the enhanced matrix is in a range of 100,000-400,000 g/mol; N₁ is selected from the soft monomer, N₂ is selected from the hard monomer and the functional monomer, and a mass content of the soft monomer, the hard monomer, and the functional monomer in the second block copolymer is 75-100%, 0-25%, and 0-5%, respectively.

2. The OCA optically clear pressure sensitive adhesive of claim 1, wherein the hard monomer comprises styrene, methyl acrylate, methyl methacrylate, acrylamide, acrylonitrile, and vinyl acetate, each having a glass transition temperature in a range of 60-150°C;
the soft monomer comprises ethyl acrylate, n-butyl acrylate, isobutyl acrylate, tert-butyl acrylate, isooctyl acrylate, n-butyl methacrylate, isobutyl methacrylate, tert-butyl methacrylate, isooctyl methacrylate, butadiene, isoprene, ethylene-butylene, and methacrylic acid, each having a glass transition temperature in a range of -90 to -30°C; the functional monomer comprises methacrylic acid, acrylic acid, itaconic acid, hydroxyethyl acrylate, hydroxypropyl acrylate, hydroxyethyl methacrylate, hydroxypropyl methacrylate, dimethylaminoethyl methacrylate, methacrylamide, N-hydroxymethyl acrylamide, glycidyl methacrylate, and maleic anhydride.

3. A method for preparing the OCA optically clear pressure sensitive adhesive of any one of claims 1-2, wherein the steps are as follows:
(1) dissolving a first amphiphilic macromolecule reversible addition fragmentation chain transfer reagent in water, then adding styrene or a mixture of styrene and methacrylic acid and performing stirring until uniform, adding a first initiator at 70-90°C and performing a reaction for 1-3 h to obtain a first homopolymer, wherein the first homopolymer is stably dispersed in water in a particle form to form a first latex;
(2) adding a 10 wt% sodium hydroxide aqueous solution, adding isooctyl acrylate or a mixture of isooctyl acrylate and methacrylic acid, adding water, adding a second initiator at 40-60°C and performing a reaction for 4-10 h under an oxygen-free environment, and then adding a hard monomer and performing a reaction for 5-10 h under an oxygen-free environment to obtain a main matrix polymer latex;
(3) after the reaction, introducing the main matrix polymer latex, 30 wt% hydrogen peroxide, and 7.5 wt% hydrochloric acid in a beaker at a volume ratio of 2:1:2, performing stirring for 15 min until uniform, then performing heating to 50°C and a reaction for 1.5-3 h to obtain a first precipitated product; washing the first precipitated product with distilled water until neutral, and performing air drying and then vacuum drying in a vacuum oven at 120°C for 5-20 h to obtain a main matrix;
(4) dissolving a second amphiphilic macromolecule reversible addition fragmentation chain transfer reagent in water, then adding styrene or a mixture of styrene and methacrylic acid and performing stirring until completely dissolved, adding the first initiator in a water bath at 70-90°C and performing a reaction for 1-3 h to obtain a second homopolymer, wherein the second homopolymer is stably dispersed in water in a particle form to form a second latex;
(5) adding a 10 wt% sodium hydroxide aqueous solution, adding isooctyl acrylate and water, then adding the second initiator in a water bath at 40-60°C and performing a reaction for 4-10 h under an oxygen-free environment to obtain an enhanced matrix polymer latex;
(6) after the reaction, introducing the enhanced matrix polymer latex, 30 wt% hydrogen peroxide, and 7.5 wt% hydrochloric acid in a beaker at a volume ratio of 2:1:2, performing stirring for 15 min until uniform, then performing heating to 40-60°C and a rection for 1.5-3 h to obtain a second precipitated product; washing the second precipitated product with distilled water several times until neutral, and performing air drying and then vacuum drying in a vacuum oven at 120°C for 5-20 h to obtain an enhanced matrix;
(7) dissolving the main matrix and the enhanced matrix in a dispersion medium, and performing coating to obtain a film under an argon environment, and drying to obtain the OCA optically clear pressure sensitive adhesive.

4. The method of claim 5, wherein the first chemical structural formula of the amphiphilic macromolecule reversible addition fragmentation chain transfer reagent and the second chemical structural formula of the amphiphilic macromolecule reversible addition fragmentation chain transfer reagent have a structure of R-(Mₙ₁-b-Nₙ₂)-X;
wherein R is an isopropanoic acid group, acetic acid group, 2-cyanoacetic acid group, or 2-aminoacetic acid group;
in Mₙ₁, M is a methacrylic acid monomer or an acrylic acid monomer unit,
n1 is an average degree of polymerization of M, and n1 ranges from 10 to 30;
in Nₙ₂, N is a styrene monomer, an n-butyl acrylate monomer, a methyl acrylate monomer, an isooctyl acrylate monomer or a methyl methacrylate monomer unit,
n2 is an average degree of polymerization of n, and n2 ranges from 1 to 8; and
X is an alkyl dithioester group or an alkyl trithioester group.

5. The method of claim 5, wherein the dispersion medium is any one of diethyl ether, methyl tert-butyl ether, tetrahydrofuran, methyl ethyl ketone, ethyl acetate, and methyl propionate.

6. The method of claim 5, wherein the first initiator in steps (1) and (4) is any one of ammonium persulfate, potassium persulfate, hydrogen peroxide, and hydrogen peroxide derivatives; and
the second initiator in steps (2) and (5) is any one of 2,2'-azobis[2-(2-imidazolin-2-yl)propane] dihydrochloride, 2,2'-azobis[2-methylpropionamidine] dihydrochloride, 2-hydroxy-4'-(2-hydroxyethoxy)-2-methyl-propiophe, sodium hydrogen persulfate/potassium persulfate redox initiator, and sodium persulfate/ammonium persulfate redox initiator.

7. The method of claim 5, wherein the acrylic acid in steps (1) or (2) is replaced with another functional monomer.
